# EUROPÄISCHE PATENTSCHRIFT

(11) **EP 3 398 742 B1**
(45) Veröffentlichungstag und Bekanntmachung des Hinweises auf die Patenterteilung: **27.10.2021**
(21) Anmeldenummer: 18169712.9
(22) Anmeldetag: 27.04.2018
(51) Int. Cl.: B27B 5/065, B27B 27/04, B27B 31/00, B23D 47/04, B27B 27/02, B25B 11/00, B23D 47/02

(54) **SÄGEVORRICHTUNG ZUM AUFTEILEN PLATTENFÖRMIGER WERKSTÜCKE**
SAWING DEVICE FOR CUTTING OF PANEL-SHAPED WORKPIECES
DISPOSITIF DE SCIAGE POUR COUPER DES PIÈCES EN FORME DE PLAQUE

(30) Priorität: 05.05.2017 DE 102017109695
(43) Veröffentlichungstag der Anmeldung: 07.11.2018
(73) Patentinhaber: HOLZ-HER GmbH, 72622 Nürtingen (DE)
(72) Erfinder: Weichselbaumer, Bernhard, 4801 Traunkirchen (AT)
(74) Vertreter: Hoeger, Stellrecht & Partner Patentanwälte mbB

(56) Entgegenhaltungen:
- EP-A1- 1 362 676
- EP-A1- 2 366 512
- EP-A1- 2 944 409
- DE-A1-102013 223 041
- US-A- 5 740 711

## Beschreibung

Die Erfindung betrifft eine Sägevorrichtung zum Aufteilen plattenförmiger Werkstücke, mit einer horizontalen Werkstückauflagefläche, die einen sich entlang einer Sägelinie verlaufenden Sägespalt aufweist, einem entlang des Sägespalts verfahrbaren Sägeaggregat zum Aufteilen der Werkstücke und einer Vorschubeinrichtung, die in einer horizontalen, senkrecht zur Sägelinie ausgerichteten Vorschubrichtung hin und her verfahrbar ist und die mehrere im Abstand zueinander angeordnete Greifeinrichtungen aufweist zum Ergreifen der Werkstücke, und mit einem in vertikaler Richtung anhebbaren und absenkbaren Druckbalken zum Andrücken der Werkstücke gegen die Werkstückauflagefläche während des Aufteilens, sowie mit mindestens einer ersten Anschlagfläche, die an einem Maschinengestell der Sägevorrichtung angeordnet ist und an die die Werkstücke mit einer senkrecht zur Sägelinie ausgerichteten ersten Schmalseite anlegbar sind, und mit mindestens einer zweiten Anschlagfläche, die an der Vorschubeinrichtung angeordnet ist und an die die Werkstücke mit einer senkrecht zur Vorschubrichtung ausgerichteten zweiten Schmalseite anlegbar sind.

Eine derartige Sägevorrichtung ist aus der EP 2 944 409 A1 bekannt. Mit ihrer Hilfe können plattenförmige Werkstücke insbesondere aus Holz oder Holzersatzstoffen, beispielsweise Spanplatten, zugeschnitten werden. Hierbei können mehrere Werkstücke aufeinandergestapelt und gleichzeitig zugeschnitten werden.

Großformatige Werkstücke werden üblicherweise zunächst in einem Zuführbereich der Sägevorrichtung angeordnet und dann mit Hilfe der Vorschubeinrichtung so weit in Richtung auf die Werkstückauflagefläche bewegt, dass sie relativ zu dem an der Werkstückauflagefläche angeordneten Sägespalt eine programmtechnisch vorgebbare Stellung einnehmen. Die Vorschubeinrichtung weist mehrere im Abstand zueinander angeordnete Greifeinrichtungen auf, mit deren Hilfe die Werkstücke ergriffen werden können, um sie der Werkstückauflagefläche zuzuführen. Haben die Werkstücke ihre programmtechnisch vorgebbare Position relativ zum Sägespalt eingenommen, so werden sie mit Hilfe des Druckbalkens gegen die Werkstückauflagefläche gepresst, so dass sie sich während des Aufteilens nicht verschieben können.

Kleinformatige Werkstücke werden von einem Benutzer der Sägevorrichtung häufig manuell an der Werkstückauflagefläche positioniert. Die Werkstücke können hierbei vom Benutzer mit einer ersten, senkrecht zur Sägelinie ausgerichteten Schmalseite an mindestens eine erste Anschlagfläche angelegt werden, und mit einer senkrecht zur Vorschubrichtung ausgerichteten zweiten Schmalseite können die Werkstücke vom Benutzer an mindestens eine zweite Anschlagfläche angelegt werden. Die erste Anschlagfläche ist am Maschinengestell der Sägevorrichtung angeordnet, beispielsweise an einer Schmalseite der Werkstückauflagefläche, und die zweite Anschlagfläche ist an der Vorschubeinrichtung angeordnet. Das Anlegen der Werkstücke an die beiden Anschlagflächen ermöglicht es, die Werkstücke relativ zum Sägespalt in einer vorgegebenen Lage an der Werkstückauflagefläche zu positionieren. Da die zweite Anschlagfläche an der Vorschubeinrichtung angeordnet ist, kann die zweite Anschlagfläche durch eine programmtechnisch vorgebbare Positionierung der Vorschubeinrichtung einen vorgegebenen Abstand zum Sägespalt einnehmen.

Nachdem die Werkstücke vom Benutzer manuell an die Anschlagflächen angelegt wurden, werden sie von den Greifeinrichtungen erfasst, so dass sie ihre vorgegebene Stellung beibehalten, bis sie vom Druckbalken gegen die Werkstückauflagefläche gepresst werden. Um dem Benutzer das Anlegen der Werkstücke an die Anschlagflächen zu erleichtern, wird häufig auf der Werkstückauflagefläche ein Luftpolster gebildet, so dass die Werkstücke mit geringem Kraftaufwand verschoben werden können. Der Benutzer muss allerdings darauf achten, dass die an die Anschlagflächen angelegten Werkstücke nicht unbeabsichtigt verrutschen, solange sie noch nicht von den Greifeinrichtungen erfasst worden sind. In vielen Fällen hält deshalb der Benutzer die Werkstücke so lange an den Anschlagflächen, bis sie von den Greifeinrichtungen erfasst wurden. Hierbei besteht die Gefahr, dass sich der Benutzer die Finger an den Greifeinrichtungen einklemmt.

Aufgabe der vorliegenden Erfindung ist es daher, eine Sägevorrichtung der eingangs genannten Art derart weiterzubilden, dass die Gefahr einer Verletzung des Benutzers durch die Greifeinrichtungen vermindert wird.

Diese Aufgabe wird durch eine Sägevorrichtung mit den Merkmalen von Patentanspruch 1 gelöst.

In die Erfindung fließt der Gedanke mit ein, dass die Gefahr einer Verletzung des Benutzers durch die Greifeinrichtungen vermindert werden kann, indem die Werkstücke mit mindestens einer Schmalseite an einer Anschlagfläche fixiert werden. Zu diesem Zweck weist die Sägevorrichtung mindestens eine mit Unterdruck beaufschlagbare Saugöffnung auf, die fluchtend zu der mindestens einen zweiten Anschlagfläche ausgerichtet ist. Aufgrund der Beaufschlagung der mindestens einen Saugöffnung mit Unterdruck können die Werkstücke angesaugt und fixiert werden. Haben die Werkstücke ihre vorgegebene Position an den Anschlagflächen eingenommen, so ist es nicht länger erforderlich, die Werkstücke manuell festzuhalten, bis sie von den Greifeinrichtungen erfasst wurden, vielmehr werden die Werkstücke mittels des auf mindestens eine Schmalseite einwirkenden Unterdrucks fixiert, so dass eine unbeabsichtigte Bewegung der Werkstücke verhindert wird. Der Benutzer kann die Werkstücke freigeben, sobald sie ihre Stellung an den Anschlagflächen eingenommen haben. Der Benutzer kann somit nach dem Anlegen der Werkstücke an die Anschlagflächen seine Hände aus dem Gefahrenbereich der Sägevorrichtung herausnehmen, ohne dass dies mit dem Risiko verbunden ist, dass die Werkstücke verrutschen.

Gemäß der Erfindung ist zwischen zwei einander unmittelbar benachbarten Greifeinrichtungen mindestens eine Saugöffnung angeordnet. Durch Unterdruckbeaufschlagung von mindestens einer Saugöffnung, die zwischen zwei Greifeinrichtungen angeordnet ist, werden die zweiten Schmalseiten mit einer Saugkraft beaufschlagt, unter deren Wirkung sie gegen die mindestens eine zweite Anschlagfläche gedrückt werden.

Es kann vorgesehen sein, dass nur der mindestens einen zweiten Anschlagfläche zumindest eine mit Unterdruck beaufschlagbare Saugöffnung zugeordnet ist zum Fixieren der Werkstücke an der mindestens einen zweiten Anschlagfläche. Dies gibt die Möglichkeit, eine Schmalseite der Werkstücke an einer Anschlagfläche zu fixieren.

Von Vorteil ist es, wenn die Sägevorrichtung sowohl mindestens eine mit Unterdruck beaufschlagbare Saugöffnung aufweist, die fluchtend zu der mindestens einen ersten Anschlagfläche ausgerichtet ist, als auch mindestens eine mit Unterdruck beaufschlagbare Saugöffnung, die fluchtend zu der mindestens einen zweiten Anschlagfläche ausgerichtet ist. Bei einer derartigen Ausgestaltung sind sowohl der mindestens einen ersten Anschlagfläche als auch der mindestens einen zweiten Anschlagfläche mit Unterdruck beaufschlagbare Saugöffnungen zugeordnet. Dies gibt die Möglichkeit, eine erste Schmalseite der Werkstücke an der mindestens einen ersten Anschlagfläche und gleichzeitig eine zweite Schmalseite der Werkstücke an der mindestens einen zweiten Anschlagfläche zu fixieren.

Die Sägevorrichtung weist bei einer vorteilhaften Ausgestaltung der Erfindung eine parallel zur Vorschubrichtung ausgerichtete Anschlagleiste auf, die eine senkrecht zur Sägelinie ausgerichtete Leistenvorderseite aufweist, an der die mindestens eine erste Anschlagfläche angeordnet ist.

Von Vorteil ist es, wenn mindestens eine Saugöffnung in die Leistenvorderseite einmündet. Durch Beaufschlagung dieser Saugöffnung mit Unterdruck können die Werkstücke mit ihrer ersten Schmalseite an die Leistenvorderseite angesaugt werden, an der die mindestens eine erste Anschlagfläche angeordnet ist.

Bevorzugt mündet zu beiden Seiten des Sägespalts, das heißt sowohl auf der der Vorschubeinrichtung zugewandten Seite des Sägespalts als auch auf der der Vorschubeinrichtung abgewandten Seite des Sägespalts, zumindest eine Saugöffnung in die Leistenvorderseite.

Die Sägevorrichtung weist bei einer vorteilhaften Ausgestaltung der Erfindung mehrere zweite Anschlagflächen auf, an die die Werkstücke mit ihrer zweiten Schmalseite anlegbar sind. Die zweiten Anschlagflächen sind fluchtend zueinander in einer Ebene angeordnet.

Von Vorteil ist es, wenn an mindestens einer Greifeinrichtung eine oder mehrere zweite Anschlagflächen angeordnet sind. Insbesondere kann vorgesehen sein, dass an jeder Greifeinrichtung mindestens eine zweite Anschlagfläche angeordnet ist.

Bevorzugt weist zumindest eine Greifeinrichtung ein Gehäuse auf mit mindestens einer dem Sägespalt zugewandten Stirnfläche, die eine zweite Anschlagfläche ausbildet.

Insbesondere kann vorgesehen sein, dass das Gehäuse zwei parallel zueinander ausgerichtete Seitenwände umfasst, die jeweils eine dem Sägespalt zugewandte Stirnfläche aufweisen, die eine zweite Anschlagfläche ausbildet. Bei einer derartigen Ausgestaltung können die Werkstücke mit ihrer der Vorschubeinrichtung zugewandten zweiten Schmalseite an die Stirnflächen der Seitenwände des Gehäuses angelegt werden. Zwischen den Seitenwänden kann ein Greifarm beweglich gehalten sein.

Insbesondere kann vorgesehen sein, dass zwischen den beiden Seitenwänden ein Greifarm verschwenkbar gelagert ist. Der Greifarm kann mit einem freien Ende aus dem Gehäuse herausragen und einen Spannbacken ausbilden. Günstigerweise wirkt der Greifarm mit einem Stützarm zusammen, der am Gehäuse angeordnet ist, wobei die Werkstücke zwischen den Spannbacken und den Stützarm eingeklemmt werden können.

Von Vorteil ist es, wenn die Vorschubeinrichtung mindestens eine Saugplatte aufweist, an der mindestens eine Saugöffnung angeordnet ist und die zwischen zwei einander unmittelbar benachbarten Greifeinrichtungen positioniert ist.

Bevorzugt sind an der mindestens einen Saugplatte eine Vielzahl von Saugöffnungen positioniert, die mit Unterdruck beaufschlagbar sind.

Es kann vorgesehen sein, dass die Vorschubeinrichtung eine einzige Saugplatte aufweist, die zwischen zwei Greifeinrichtungen angeordnet ist.

Bevorzugt weist die Vorschubeinrichtung mehrere Saugplatten auf, die jeweils zwischen zwei Greifeinrichtungen angeordnet sind.

Insbesondere kann vorgesehen sein, dass zwischen allen Greifeinrichtungen jeweils eine Saugplatte angeordnet ist, die mindestens eine Saugöffnung aufweist zum Ansaugen der zweiten Schmalseite des Werkstücks.

Von Vorteil ist es, wenn die mindestens eine Saugplatte an der Vorschubeinrichtung zwischen einer Saugstellung und einer Ruhestellung hin und her bewegbar gehalten ist. Nimmt die mindestens eine Saugplatte ihre Saugstellung ein, so kann sie mit Hilfe der mindestens einen Saugöffnung auf die zweite Schmalseite der Werkstücke eine Saugkraft ausüben, unter deren Wirkung die zweite Schmalseite gegen die zweiten Anschlagflächen gedrückt wird. Ist ein Ansaugen der Werkstücke an die zweiten Anschlagflächen nicht erforderlich, so kann die mindestens eine Saugplatte in eine entgegen der Vorschubrichtung versetzt zur Saugstellung angeordnete Ruhestellung bewegt werden. Dadurch kann eine Beschädigung der Saugplatte durch die Werkstücke vermieden werden.

Die mindestens eine Saugöffnung, die an der Saugplatte angeordnet ist, mündet bevorzugt in eine senkrecht zur Vorschubrichtung ausgerichtete Plattenvorderseite der Saugplatte.

Von Vorteil ist es, wenn die Sägevorrichtung mindestens eine weitere Saugöffnung aufweist, die mit Unterdruck beaufschlagbar ist und in die Werkstückauflagefläche einmündet. Dies gibt die Möglichkeit, ein Werkstück mit seiner der Werkstückauflagefläche zugewandten Unterseite an die Werkstückauflagefläche anzusaugen, so dass dieses Werkstück nicht nur im Bereich seiner ersten Schmalseite und/oder im Bereich seiner zweiten Schmalseite mit Unterdruck beaufschlagt wird sondern zusätzlich auch im Bereich seiner Unterseite. Dies erlaubt eine besonders stabile Fixierung des Werkstückes.

Die mindestens eine weitere Saugöffnung kann beispielsweise an der der Vorschubeinrichtung abgewandten Seite des Sägespalts oder an der der Vorschubeinrichtung zugewandten Seite des Sägespalts angeordnet sein.

Besonders günstig ist es, wenn sowohl an der der Vorschubeinrichtung zugewandten Seite des Sägespalts als auch an der der Vorschubeinrichtung abgewandten Seite des Sägespalts mindestens eine weitere Saugöffnung angeordnet ist.

Wie eingangs erwähnt, ist es günstig, wenn die Sägevorrichtung ein Luftkissen ausbildet, um dem Benutzer das Anlegen der Werkstücke an die Anschlagflächen zu erleichtern. Hierzu sind bei einer bevorzugten Ausgestaltung der Erfindung an der Werkstückauflagefläche Luftauslässe angeordnet, die mit Druckluft beaufschlagbar sind.

Um die Gefahr einer Verletzung des Benutzers zusätzlich zu reduzieren, weist die Sägevorrichtung bei einer vorteilhaften Ausgestaltung der Erfindung eine Schutzwand auf, die während des Aufteilens der Werkstücke eine der Vorschubeinrichtung abgewandte Beschickungsöffnung abdeckt. Über die Beschickungsöffnung können die Werkstücke vom Benutzer manuell auf der Werkstückauflagefläche positioniert werden. Die Schutzwand deckt die Beschickungsöffnung während des Aufteilens der Werkstücke ab, so dass der Benutzer nicht in Gefahr gerät, mit den Greifeinrichtungen und/oder dem Sägeaggregat in Kontakt zu kommen.

Die Schutzwand kann beispielsweise als Lamellenwand ausgestaltet sein, die von einer Vielzahl von nebeneinander angeordneten Lamellen gebildet wird.

Besonders günstig ist es, wenn die Schutzwand zwischen einer die Beschickungsöffnung abdeckenden Schließstellung und einer die Beschickungsöffnung freigebenden Offenstellung hin und her bewegbar ist.

Die Greifeinrichtungen sind bei einer vorteilhaften Ausgestaltung der Erfindung von einer Steuereinrichtung der Sägevorrichtung aktivierbar, wenn die Schutzwand ihre Schließstellung einnimmt. Damit wird auf konstruktiv einfache Weise sichergestellt, dass der Benutzer die an die Anschlagflächen angelegten Werkstücke und seine Hände aus dem Gefahrenbereich der Sägevorrichtung herausnehmen muss, bevor die Greifeinrichtungen die Werkstücke erfassen können.

Insbesondere kann vorgesehen sein, dass die Sägevorrichtung mindestens ein Sensorelement aufweist, das die Schutzwand in ihrer Schließstellung erfasst und einer Steuereinrichtung der Sägevorrichtung ein Sensorsignal bereitstellt, und dass die Steuereinrichtung die Greifeinrichtungen in Abhängigkeit vom Vorliegen des Sensorsignals aktivieren. Solange der Benutzer die Werkstücke an die mindestens eine Anschlagfläche anlegt, nimmt die Schutzwand ihre Offenstellung ein und die Greifeinrichtungen können nicht aktiviert werden. Hat der Benutzer die Werkstücke in der gewünschten Stellung positioniert, so kann er von der Beschickungsöffnung so weit zurücktreten, dass die Schutzwand ihre Schließstellung einnehmen kann und daraufhin die Greifeinrichtungen aktiviert werden können. Solange die Greifeinrichtungen noch nicht aktiviert sind, werden die Werkstücke mit mindestens einer Schmalseite an einer Anschlagfläche fixiert, indem auf die Schmalseite eine Saugkraft ausgeübt wird, um eine unbeabsichtigte Bewegung der Werkstücke zu verhindern.

Die nachfolgende Beschreibung einer vorteilhaften Ausführungsform der Erfindung dient im Zusammenhang mit der Zeichnung der näheren Erläuterung. Es zeigen:

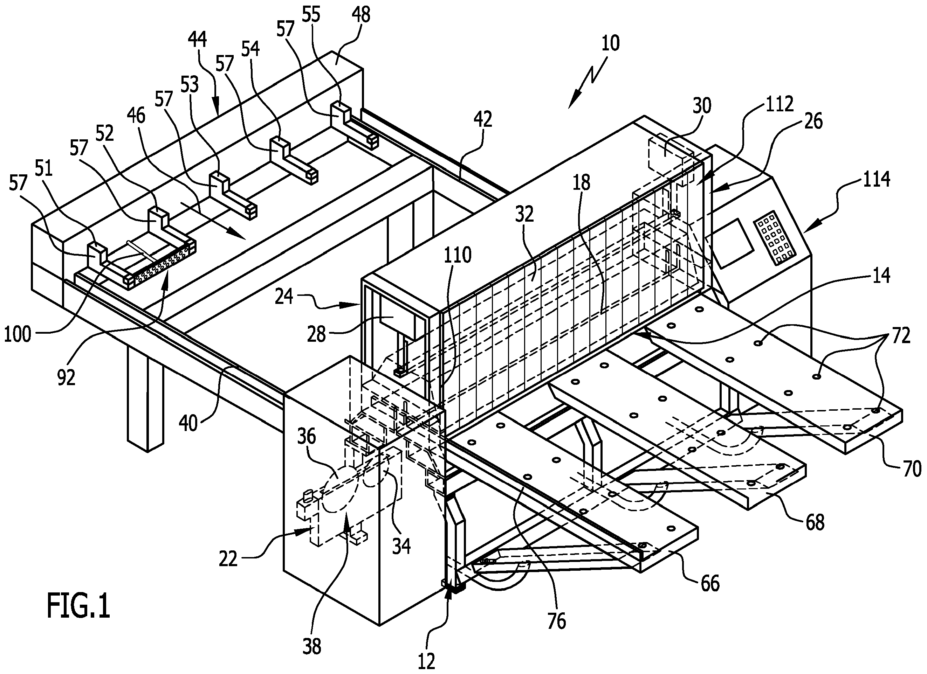

- Figur 1:: eine perspektivische Darstellung einer vorteilhaften Ausführungsform einer erfindungsgemäßen Sägevorrichtung;
- Figur 2:: eine Draufsicht auf die Sägevorrichtung aus Figur 1;
- Figur 3:: eine Schnittansicht der Sägevorrichtung längs der Linie 3-3 in Figur 2;
- Figur 4:: eine Schnittansicht der Sägevorrichtung entlang der Linie 4-4 in Figur 2.

In der Zeichnung ist eine vorteilhafte Ausführungsform einer erfindungsgemäßen Sägevorrichtung schematisch dargestellt und insgesamt mit dem Bezugszeichen 10 belegt. Die Sägevorrichtung 10 weist ein Maschinengestell 12 auf, das einen Auflagetisch 14 mit einer ebenen, horizontal ausgerichteten Werkstückauflagefläche 16 ausbildet. Die Werkstückauflagefläche 16 weist einen Sägespalt 18 auf, der sich entlang einer Sägelinie 20 erstreckt. Unterhalb des Sägespalts 18 ist ein Transportwagen 22 entlang des Sägespalts 18 linear hin und her verfahrbar am Maschinengestell 12 gehalten.

An einander gegenüberliegenden Stirnseiten trägt das Maschinengestell 12 jeweils einen Druckbalkenturm 24, 26, der eine Führungsanordnung 28 bzw. 30 aufnimmt. Mittels der Führungsanordnungen 28, 30 ist an den Druckbalkentürmen 24, 26 ein Druckbalken 32 senkrecht zur Werkstückauflagefläche 16 verstellbar gehalten. Der Druckbalken 32 weist in üblicher Weise ein ungefähr C-förmiges Profil auf mit einer dem Sägespalt 18 zugewandten schlitzförmigen Öffnung, in die bei der Aufteilung eines Werkstücks, nämlich bei Vornahme eines Sägeschnitts, verstellbar am Transportwagen 32 gehaltene Sägeblätter 34, 36 eines Sägeaggregats 38 eintreten können.

Die Führungsanordnungen 28, 30 der beiden Druckbalkentürme 24, 26 umfassen in üblicher und deshalb in der Zeichnung zur Erzielung einer besseren Übersicht nicht dargestellter Weise Pneumatik- oder Hydraulikzylinder, mit denen der Druckbalken 32 angehoben und abgesenkt werden kann. Alternativ könnten zum Anheben und Absenken des Druckbalkens 32 auch Elektroantriebe zum Einsatz kommen.

Die Sägevorrichtung 10 weist zwei parallel zueinander und senkrecht zur Sägelinie 20 ausgerichtete Führungen 40, 42 auf, an denen eine Vorschubeinrichtung 44 in einer horizontal und senkrecht zur Sägelinie 20 ausgerichteten Vorschubrichtung 46 hin und her verschiebbar gehalten ist. Die Vorschubeinrichtung 44 bildet einen Transportschlitten 48 aus, der mittels eines an sich bekannten und deshalb in der Zeichnung zur Erzielung einer besseren Übersicht nicht dargestellten Antriebes entlang der Führungen 40, 42 definiert hin und her bewegt werden kann.

Die Vorschubeinrichtung 44 weist mehrere im Abstand zueinander angeordnete Greifeinrichtungen 51 bis 55 auf, die an der der Werkstückauflagefläche 16 zugewandten Seite des Transportschlittens 48 gehalten sind. Die Greifeinrichtungen 51 bis 55 weisen jeweils ein Gehäuse 56 auf mit einer ersten Seitenwand 57, einer zweiten Seitenwand 58 und einer Bodenwand 59. Zwischen den Seitenwänden 57, 58 ist ein Greifarm 60 verschwenkbar gelagert, der mit einem aus dem Gehäuse 56 herausragenden freien Ende einen Spannbacken 62 ausbildet. Dem Spannbacken 62 ist ein an der Bodenwand 59 festgelegter und in Richtung auf die Werkstückauflagefläche 16 aus dem Gehäuse 56 herausragender Stützarm 64 zugeordnet.

Auf der der Vorschubeinrichtung 44 abgewandten Seite des Auflagetisches 14 schließen sich an den Auflagetisch 14 drei Auflageplatten 66, 68, 70 an, die im Abstand zueinander angeordnet sind. Auf ihrer Oberseite weisen die Auflageplatten 66, 68 und 70 ebenso wie die Werkstückauflagefläche 16 Luftauslässe 72 auf, die von einer an sich bekannten und deshalb in der Zeichnung zur Erzielung einer besseren Übersicht nicht dargestellten Druckluftquelle mit Druckluft beaufschlagt werden können zur Ausbildung eines Luftpolsters.

Dem Druckbalkenturm 24 benachbart ist an der Werkstückauflagefläche 16 eine parallel zur Vorschubeinrichtung 44 ausgerichtete Anschlagleiste 76 angeordnet. Die Anschlagleiste 76 erstreckt sich senkrecht zur Sägelinie 20 von einer Stirnseite der Werkstückauflagefläche 16 bis an das freie Ende einer Auflageplatte 66. Die Anschlagleiste 76 weist eine senkrecht zur Sägelinie 20 und senkrecht zur Werkstückauflagefläche 16 ausgerichtete Leistenvorderseite 78 auf, die eine erste Anschlagfläche 80 ausbildet. Wie nachfolgend noch näher erläutert wird, können Werkstücke mit einer ersten Schmalseite 106 an die erste Anschlagfläche 80 angelegt werden.

In Höhe der Werkstückauflagefläche 16 münden zu beiden Seiten der Sägelinie 20 erste Saugöffnungen 84 in die erste Anschlagfläche 80 ein. Die ersten Saugöffnungen 84 können von einer an sich bekannten und deshalb in der Zeichnung zur Erzielung einer besseren Übersicht nicht dargestellten Unterdruckquelle mit Unterdruck beaufschlagt werden.

Die ersten Seitenwände 57 und die zweiten Seitenwände 58 der Gehäuse 56 der Greifeinrichtungen 51 bis 55 weisen jeweils eine der Werkstückauflagefläche 16 zugewandte Stirnseite 86 auf. Die Stirnseiten 86 bilden jeweils eine zweite Anschlagfläche 88 aus, die senkrecht zur Vorschubeinrichtung 44 ausgerichtet ist. An die zweiten Anschlagflächen 88 können die Werkstücke mit einer zweiten Schmalseite 108 angelegt werden. Dies wird nachfolgend noch näher erläutert.

Zwischen einer ersten Greifeinrichtung 51 und einer zweiten Greifeinrichtung 52 ist eine Saugplatte 92 angeordnet, die eine Vielzahl von zweiten Saugöffnungen 96 aufweist. Die zweiten Saugöffnungen 96 münden in eine der Werkstückauflagefläche 16 zugewandte und senkrecht zur Vorschubrichtung 46 ausgerichtete Plattenvorderseite 98 ein. Die zweiten Saugöffnungen 96 können über eine Unterdruckleitung 100 von einer Unterdruckquelle mit Unterdruck beaufschlagt werden. Zur Erzielung einer besseren Übersicht ist die an sich bekannte Unterdruckquelle in der Zeichnung nicht dargestellt.

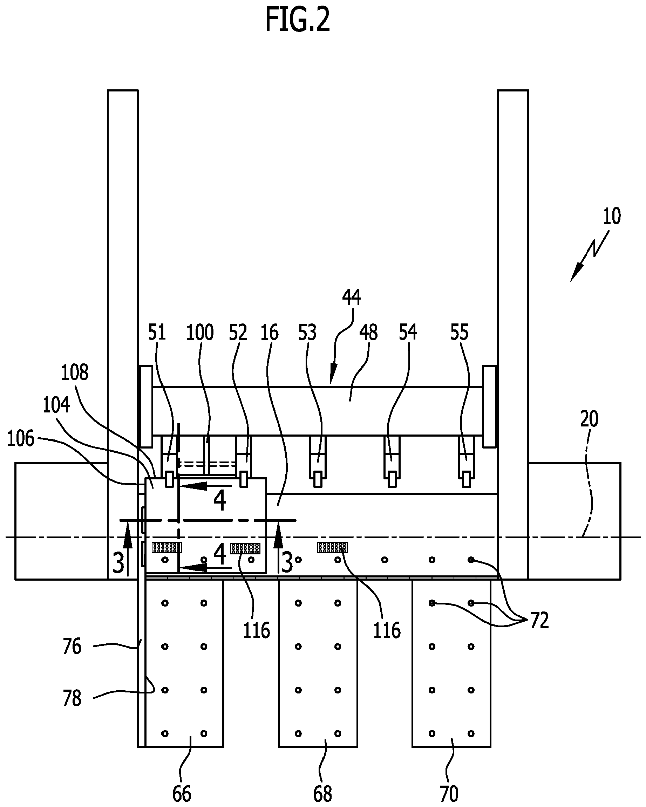

Die Saugplatte 92 kann zwischen einer in der Zeichnung in durchgezogener Linie dargestellten Saugstellung und einer in Figur 2 in gestrichelter Linie dargestellten Ruhestellung hin und her verschoben werden. In der Saugstellung ist die Plattenvorderseite 98 fluchtend zu den zweiten Anschlagflächen 88 angeordnet, wohingegen die Plattenvorderseite 98 in der Ruhestellung entgegen der Vorschubrichtung 46 versetzt zu den zweiten Anschlagflächen 88 positioniert ist.

Mit Hilfe der Sägevorrichtung 10 können plattenförmige Werkstücke, beispielsweise Werkstücke aus Holz oder Holzersatzstoffen, insbesondere Spanplatten, aufgeteilt werden. Mehrere großformatige Werkstücke können in einem Zuführbereich zwischen den beiden Führungen 40, 42 aufeinandergestapelt, von den Greifeinrichtungen 51 bis 55 erfasst und zum Aufteilen in Richtung auf den Sägespalt 18 verschoben werden. Die Vorschubeinrichtung 44 kann hierbei eine programmtechnisch vorgebbare Stellung einnehmen, um die großformatigen Werkstücke in definierter Weise zu positionieren und mittels des Sägeaggregates 38 aufzuteilen.

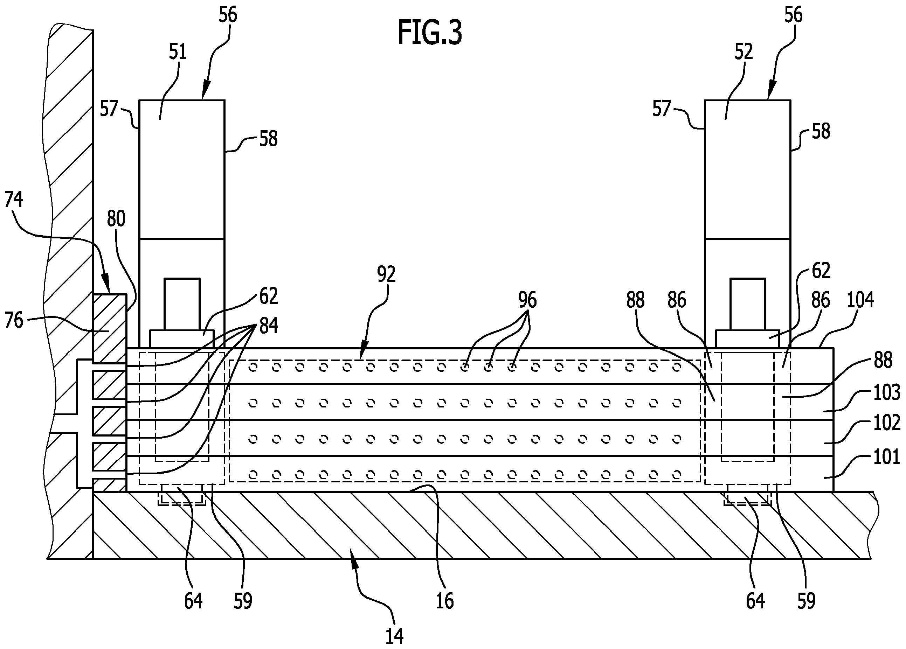

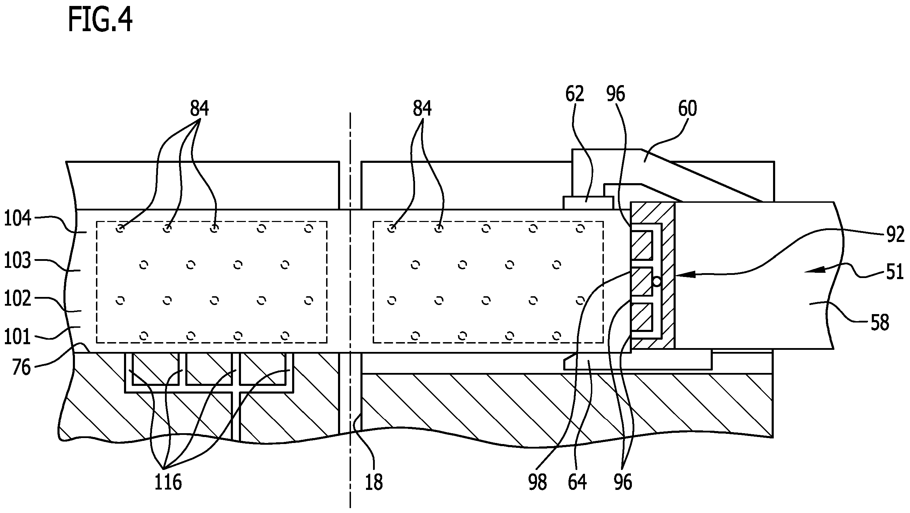

Sollen mittels der Sägevorrichtung 10 kleinformatige Werkstücke aufgeteilt werden, so können diese von einem Benutzer manuell auf der Werkstückauflagefläche 16 aufeinandergestapelt werden. In den Figuren 2 bis 4 sind vier kleinformatige Werkstücke 101 bis 104 schematisch dargestellt, die aufeinandergestapelt sind und eine identische Form aufweisen mit einer senkrecht zur Sägelinie 20 ausgerichteten ersten Schmalseite 106 und einer senkrecht zur Vorschubrichtung 46 ausgerichteten zweiten Schmalseite 108.

Um die kleinformatigen Werkstücke 101 bis 104 in programmtechnisch vorgebbarer Weise aufzuteilen, kann die Vorschubeinrichtung 44 eine vorgegebene Stellung einnehmen, wie sie beispielhaft in Figur 2 dargestellt ist. In dieser Stellung nehmen die zweiten Anschlagflächen 88 einen vorgegebenen Abstand zum Sägespalt 18 ein. Die Werkstücke 101 bis 104 können von einem Benutzer mit ihrer zweiten Schmalseite 108 an die zweiten Anschlagflächen 88 angelegt werden, so dass die Werkstücke 101 bis 104 relativ zur Sägelinie 20 eine vorgegebene Position auf der Werkstückauflagefläche 16 einnehmen. Außerdem können die Werkstücke 101 bis 104 mit ihrer ersten Schmalseite 106 an die erste Anschlagfläche 80 angelegt werden. Aufgrund der Beaufschlagung der ersten Saugöffnungen 84 mit Unterdruck werden die Werkstücke mit ihrer ersten Schmalseite 106 an die erste Anschlagfläche 80 angesaugt und an dieser fixiert, und aufgrund der Beaufschlagung der zweiten Saugöffnungen 96 mit Unterdruck werden die Werkstücke 101 bis 104 mit ihrer zweiten Schmalseite 108 an die Saugplatte 92 angesaugt und dadurch an den zweiten Anschlagflächen 88 fixiert, sofern die Saugplatte 92 ihre fluchtend zu den zweiten Anschlagflächen 88 ausgerichtete Saugstellung einnimmt. Das Positionieren des Stapels von Werkstücken 101 bis 104 an der ersten Anschlagfläche 80 und an den zweiten Anschlagflächen 88 wird dem Benutzer dadurch erleichtert, dass mittels der Luftauslässe 72 ein Luftpolster erzeugt wird, so dass der Werkstückstapel vom Benutzer mit geringem Kraftaufwand verschoben werden kann.

Im dargestellten Ausführungsbeispiel können die Werkstücke 101 bis 104 an der ersten Anschlagfläche 80 und auch an den zweiten Anschlagflächen 88 fixiert werden, da sowohl der ersten Anschlagfläche 80 als auch den zweiten Anschlagflächen 88 mit Unterdruck beaufschlagbare Saugöffnungen 84 beziehungsweise 96 zugeordnet sind. Es kann allerdings auch vorgesehen sein, dass nur den zweiten Anschlagflächen 88 mit Unterdruck beaufschlagbare Saugöffnungen zugeordnet sind, so dass die Werkstücke 101 bis 104 nur an den zweiten Anschlagflächen 88 fixiert werden.

Zum Positionieren der kleinformatigen Werkstücke 101 bis 104 nimmt der Benutzer eine Stellung an der der Vorschubeinrichtung 44 abgewandten Seite der Werkstückauflagefläche 16 ein. Auf dieser Seite weist die Sägevorrichtung 10 bei angehobenem Druckbalken 32 eine Beschickungsöffnung 110 auf, die von dem angehobenen Druckbalken 32, der Werkstückauflagefläche 16 und beiden Druckbalkentürmen 24, 26 begrenzt wird und durch die hindurch der Benutzer die Werkstücke 101 bis 104 auf der Werkstückauflagefläche 16 positionieren kann. An der Beschickungsöffnung 110 ist eine Schutzwand angeordnet, die im dargestellten Ausführungsbeispiel von einer Lamellenwand 112 gebildet wird. Die Lamellenwand 112 kann zwischen einer in der Zeichnung nicht dargestellten Offenstellung und einer in der Zeichnung dargestellten Schließstellung hin und her bewegt werden. In der Offenstellung gibt die Lamellenwand 112 die Beschickungsöffnung 110 frei, so dass die Werkstückauflagefläche 16 dem Benutzer zugänglich ist, und in der Schließstellung deckt die Lamellenwand 112 die Beschickungsöffnung 110 ab, so dass die Werkstückauflagefläche 16 dem Benutzer nicht zugänglich ist. Mittels an sich bekannter und deshalb zur Erzielung einer besseren Übersicht in der Zeichnung nicht dargestellter Sensorelemente kann geprüft werden, ob die Lamellenwand 112 ihre Offenstellung oder ihre Schließstellung eingenommen hat. Entsprechende Sensorsignale können einer Steuereinrichtung 114 der Sägevorrichtung 10 zugeführt werden.

Wie voranstehend erläutert, können die Werkstücke 101 bis 104 vom Benutzer an die erste Anschlagfläche 80 und an die zweiten Anschlagflächen 88 angelegt werden und durch Beaufschlagung der ersten Saugöffnungen 84 und der zweiten Saugöffnungen 96 mit Unterdruck können die Werkstücke 101 bis 104 an den Anschlagflächen 80 und 88 fixiert werden.

Eine zusätzliche Fixierung kann dadurch erfolgen, dass auch in die Werkstückauflagefläche 16 Saugöffnungen 116 einmünden, die mit Unterdruck beaufschlagt werden können. Im dargestellten Ausführungsbeispiel sind diese weiteren Saugöffnungen 116 auf der der Vorschubeinrichtung 44 abgewandten Seite des Sägespalts 18 angeordnet. Es kann aber auch vorgesehen sein, dass die weiteren Saugöffnungen 116 auf der der Vorschubeinrichtung 44 zugewandten Seite des Sägespalts 18 oder auch zu beiden Seiten des Sägespalts 18 angeordnet sind.

Solange die Werkstücke 101 bis 104 positioniert werden, nimmt die Lamellenwand 112 ihre Offenstellung ein. Wenn die Werkstücke in der gewünschten Weise ausgerichtet und fixiert sind, kann der Benutzer von der Beschickungsöffnung 110 zurücktreten und die Lamellenwand 112 kann ihre Schließstellung einnehmen. Anschließend können die Greifeinrichtungen 51 bis 55 von der Steuereinrichtung 114 aktiviert werden, so dass sie die aufeinandergestapelten Werkstücke 101 bis 104 ergreifen, wobei die Werkstücke 101 bis 104 zwischen den Spannbacken 62 und den Stützarmen 64 eingeklemmt werden. Anschließend kann der Druckbalken 32 abgesenkt werden, so dass die Werkstücke 101 bis 104 gegen die Werkstückauflagefläche 16 gepresst werden. Danach können die Werkstücke 101 bis 104 mittels der Sägeblätter 34 und 36 aufgeteilt werden, indem das Sägeaggregat 38 entlang des Sägespalts 18 verfahren wird.

Das Positionieren kleinformatiger Werkstücke 101 bis 104 an der ersten Anschlagfläche 80 und an den zweiten Anschlagflächen 88 gestaltet sich somit sehr einfach, wobei keine Verletzungsgefahr für den Benutzer besteht, insbesondere besteht keine Gefahr, dass der Benutzer seine Finger an den Greifeinrichtungen 51 bis 55 einklemmt. Die Greifeinrichtungen 51 bis 55 werden erst dann aktiviert, wenn die Lamellenwand 112 ihre Schließstellung eingenommen hat, und um eine zwischenzeitliche unbeabsichtigte Bewegung der Werkstücke 101 bis 104 zu vermeiden, werden diese mit ihren ersten Schmalseiten 106 an der ersten Anschlagfläche 80 und mit ihren zweiten Schmalseiten 108 an den zweiten Anschlagflächen 88 fixiert, indem die ersten Saugöffnungen 84 und die zweiten Saugöffnungen 96 mit Unterdruck beaufschlagt werden und die Saugplatte 92 ihre Saugstellung einnimmt. Ist ein Ansaugen der Werkstücke 101 bis 104 nicht erforderlich, so kann die Saugplatte 92 ihre Ruhestellung einnehmen.

## Patentansprüche

1. Sägevorrichtung zum Aufteilen plattenförmiger Werkstücke, mit einer horizontalen Werkstückauflagefläche (16), die einen sich entlang einer Sägelinie (20) verlaufenden Sägespalt (18) aufweist, einem entlang des Sägespalts (18) verfahrbaren Sägeaggregat (38), einer Vorschubeinrichtung (44), die in einer horizontalen, senkrecht zur Sägelinie (20) ausgerichteten Vorschubrichtung (46) hin und her verfahrbar ist und mehrere im Abstand zueinander angeordnete Greifeinrichtungen (51, 52, 53, 54, 55) aufweist zum Ergreifen der Werkstücke, und mit einem anhebbaren und absenkbaren Druckbalken (32) zum Andrücken der Werkstücke gegen die Werkstückauflagefläche (16), sowie mit mindestens einer ersten Anschlagfläche (80), die an einem Maschinengestell (12) der Sägevorrichtung (10) angeordnet ist und an die die Werkstücke mit einer senkrecht zur Sägelinie (20) ausgerichteten ersten Schmalseite (106) anlegbar sind, und mit mindestens einer zweiten Anschlagfläche (88), die an der Vorschubeinrichtung (44) angeordnet ist und an die die Werkstücke mit einer senkrecht zur Vorschubrichtung (46) ausgerichteten zweiten Schmalseite (108) anlegbar sind, **dadurch gekennzeichnet, dass** die Sägevorrichtung (10) mindestens eine Saugöffnung (96) aufweist, die mit Unterdruck beaufschlagbar und fluchtend zu der mindestens einen zweiten Anschlagfläche (88) ausgerichtet ist zum Fixieren der Werkstücke an der mindestens einen zweiten Anschlagfläche (88), wobei zwischen zwei einander unmittelbar benachbarten Greifeinrichtungen (51, 52) mindestens eine Saugöffnung (96) angeordnet ist.

2. Sägevorrichtung nach Anspruch 1, **dadurch gekennzeichnet, dass** die Sägevorrichtung (10) eine parallel zur Vorschubrichtung (46) ausgerichtete Anschlagleiste (76) umfasst, die eine senkrecht zur Sägelinie ausgerichtete Leistenvorderseite (78) aufweist, an der die mindestens eine erste Anschlagfläche (80) angeordnet ist.

3. Sägevorrichtung nach Anspruch 2, **dadurch gekennzeichnet, dass** mindestens eine Saugöffnung (84) in die Leistenvorderseite (78) einmündet.

4. Sägevorrichtung nach Anspruch 2 oder 3, **dadurch gekennzeichnet, dass** zu beiden Seiten des Sägespalts (18) jeweils mindestens eine Saugöffnung (84) in die Leistenvorderseite (78) einmündet.

5. Sägevorrichtung nach einem der voranstehenden Ansprüche, **dadurch gekennzeichnet, dass** die Sägevorrichtung (10) mehrere zweite Anschlagflächen (88) aufweist, an die die Werkstücke mit ihrer zweiten Schmalseite (108) anlegbar sind.

6. Sägevorrichtung nach einem der voranstehenden Ansprüche, **dadurch gekennzeichnet, dass** an mindestens einer Greifeinrichtung (51, 52, 53, 54, 55) eine oder mehrere zweite Anschlagflächen (88) angeordnet sind.

7. Sägevorrichtung nach einem der voranstehenden Ansprüche, **dadurch gekennzeichnet, dass** mindestens eine Greifeinrichtung (51, 52, 53, 54, 55) ein Gehäuse (56) aufweist mit mindestens einer dem Sägespalt (18) zugewandten Stirnseite (86), die eine zweite Anschlagfläche (88) ausbildet.

8. Sägevorrichtung nach Anspruch 7, **dadurch gekennzeichnet, dass** das Gehäuse (56) zwei parallel zueinander ausgerichtete Seitenwände (57, 58) umfasst, wobei die Seitenwände (57, 58) jeweils eine dem Sägespalt (18) zugewandte Stirnseite (86) aufweisen, die eine zweite Anschlagfläche (88) ausbildet.

9. Sägevorrichtung nach einem der voranstehenden Ansprüche, **dadurch gekennzeichnet, dass** die Vorschubeinrichtung (44) mindestens eine Saugplatte (92) aufweist, an der mindestens eine Saugöffnung (96) angeordnet ist und die zwischen zwei einander unmittelbar benachbarten Greifeinrichtungen (51, 52) positioniert ist.

10. Sägevorrichtung nach Anspruch 9, **dadurch gekennzeichnet, dass** die Saugplatte (92) an der Vorschubeinrichtung (44) zwischen einer Saugstellung und einer Ruhestellung hin und her bewegbar gehalten ist.

11. Sägevorrichtung nach Anspruch 9 oder 10, **dadurch gekennzeichnet, dass** mindestens eine Saugöffnung (96) in eine senkrecht zur Vorschubrichtung (46) ausgerichtete Plattenvorderseite (98) der Saugplatte (92) einmündet.

12. Sägevorrichtung nach einem der voranstehenden Ansprüche, **dadurch gekennzeichnet, dass** die Sägevorrichtung (10) mindestens eine weitere Saugöffnung (116) aufweist, die mit Unterdruck beaufschlagbar ist und in die Werkstückauflagefläche (16) einmündet.

13. Sägevorrichtung nach einem der voranstehenden Ansprüche, **dadurch gekennzeichnet, dass** an der Werkstückauflagefläche (16) mit Druckluft beaufschlagbare Luftauslässe (72) angeordnet sind zur Ausbildung eines Luftkissens.

14. Sägevorrichtung nach einem der voranstehenden Ansprüche, **dadurch gekennzeichnet, dass** die Sägevorrichtung (10) eine Schutzwand aufweist, die während des Aufteilens der Werkstücke eine der Vorschubeinrichtung (44) abgewandte Beschickungsöffnung (110) der Sägevorrichtung (10) abdeckt.

15. Sägevorrichtung nach Anspruch 14, **dadurch gekennzeichnet, dass** die Schutzwand als Lamellenwand (112) ausgestaltet ist.

16. Sägevorrichtung nach Anspruch 14 oder 15, **dadurch gekennzeichnet, dass** die Schutzwand zwischen einer die Beschickungsöffnung (110) freigebenden Offenstellung und einer die Beschickungsöffnung abdeckenden Schließstellung hin und her bewegbar ist.

17. Sägevorrichtung nach Anspruch 14, 15 oder 16, **dadurch gekennzeichnet, dass** die Greifeinrichtungen (51, 52, 53, 54, 55) von einer Steuereinrichtung (114) der Sägevorrichtung (10) aktivierbar sind, wenn die Schutzwand ihre Schließstellung einnimmt.

## Claims

1. Sawing apparatus for dividing panel-shaped workpieces, comprising a horizontal workpiece bearing surface (16) that has a sawing gap (18) extending along a sawing line (20), a sawing assembly (38) that can travel along the sawing gap (18), a feed device (44) that can travel back and forth in a horizontal feed direction (46) aligned perpendicularly to the sawing line (20), and a plurality of gripping devices (51, 52, 53, 54, 55) arranged at a distance from one another for gripping the workpieces, and comprising a raisable and lowerable pressure beam (32) for pressing the workpieces against the workpiece bearing surface (16), as well as comprising a first stop face (80) that is arranged on a machine frame (12) of the sawing apparatus (10) and against which the workpieces can be placed with a first narrow side (106) aligned perpendicularly to the sawing line (20), and comprising at least one second stop face (88) that is arranged on the feed device (44) and against which the workpieces can be placed with a second narrow side (108) aligned perpendicularly to the feed direction (46), **characterized in that** the sawing apparatus (10) comprises at least one suction opening (96) that can be acted upon with underpressure and is aligned flush with the at least one second stop face (88) for fixing the workpieces to the at least one second stop face (88), wherein at least one suction opening (96) is arranged between two gripping devices (51, 52) that are directly adjacent to one another.

2. Sawing apparatus in accordance with Claim 1, **characterized in that** the sawing apparatus (10) comprises a stop strip (76) that is aligned in parallel to the feed direction (46) and has a strip front side (78) aligned perpendicularly to the sawing line, on which the at least one first stop face (80) is arranged.

3. Sawing apparatus in accordance with Claim 2, **characterized in that** at least one suction opening (84) opens into the strip front side (78).

4. Sawing apparatus in accordance with Claim 2 or 3, **characterized in that** at least one respective suction opening (84) opens into the strip front side (78) on both sides of the sawing gap (18).

5. Sawing apparatus in accordance with any one of the preceding Claims, **characterized in that** the sawing apparatus (10) comprises a plurality of second stop faces (88) against which the workpieces can be placed with their second narrow side (108).

6. Sawing apparatus in accordance with any one of the preceding Claims, **characterized in that** one or more second stop faces (88) are arranged on at least one gripping device (51, 52, 53, 54, 55).

7. Sawing apparatus in accordance with any one of the preceding Claims, **characterized in that** at least one gripping device (51, 52, 53, 54, 55) comprises a housing (56) with at least one face side (86) that faces toward the sawing gap (18) and forms a second stop face (88).

8. Sawing apparatus in accordance with Claim 7, **characterized in that** the housing (56) comprises two side walls (57, 58) aligned in parallel to one another, wherein the side walls (57, 58) each comprise a face side (86) that faces toward the sawing gap (18) and forms a second stop face (88).

9. Sawing apparatus in accordance with any one of the preceding Claims, **characterized in that** the feed device (44) comprises at least one suction plate (92) on which at least one suction opening (96) is arranged, and which suction plate (92) is positioned between two gripping devices (51, 52) that are directly adjacent to one another.

10. Sawing apparatus in accordance with Claim 9, **characterized in that** the suction plate (92) is held on the feed device (44) so as to be movable back and forth between a suction position and a rest position.

11. Sawing apparatus in accordance with Claim 9 or 10, **characterized in that** at least one suction opening (96) opens into a plate front side (98) of the suction plate (92) that is aligned perpendicularly to the feed direction (46).

12. Sawing apparatus in accordance with any one of the preceding Claims, **characterized in that** the suction apparatus (10) comprises at least one further suction opening (116) that can be acted upon with underpressure and opens into the workpiece bearing surface (16).

13. Sawing apparatus in accordance with any one of the preceding Claims, **characterized in that** air outlets (72) that can be acted upon with compressed air are arranged on the workpiece bearing surface (16) for forming an air cushion.

14. Sawing apparatus in accordance with any one of the preceding Claims, **characterized in that** the sawing apparatus (10) comprises a protective wall that, during the dividing of the workpieces, covers a loading opening (110) of the sawing apparatus (10) remote from the feed device (44).

15. Sawing apparatus in accordance with Claim 14, **characterized in that** the protective wall is configured as a slatwall (112).

16. Sawing apparatus in accordance with Claim 14 or 15, **characterized in that** the protective wall is movable back and forth between an open position that unblocks the loading opening (110) and a closed position that covers the loading opening.

17. Sawing apparatus in accordance with Claim 14, 15, or 16, **characterized in that** the gripping devices (51, 52, 53, 54, 55) are activatable by a control device (114) of the sawing apparatus (10) when the protective wall adopts its closed position.

## Revendications

1. Dispositif de sciage pour diviser des pièces en forme de plaque, avec une surface de support de pièce (16) horizontale, qui présente une fente de sciage (18) s'étendant le long d'une ligne de sciage (20), un groupe de sciage (38) déplaçable le long de la fente de sciage (18), un système d'avance (44), qui est déplaçable en va-et-vient dans une direction d'avance (46) horizontale, orientée perpendiculairement à la ligne de sciage (20), et qui présente plusieurs systèmes de préhension (51, 52, 53, 54, 55) disposés à distance les uns des autres pour la saisie des pièces, et avec une barre de pression (32) pouvant être levée et pouvant être baissée pour presser les pièces contre la surface de support de pièce (16), ainsi qu'avec au moins une première surface de butée (80), qui est disposée sur un bâti de machine (12) du dispositif de sciage (10) et sur laquelle les pièces peuvent être placées avec un premier petit côté (106) orienté perpendiculairement à la ligne de sciage (20), et avec au moins une deuxième surface de butée (88), qui est disposée sur le système d'avance (44) et sur laquelle les pièces peuvent être placées avec un deuxième petit côté (108) orienté perpendiculairement à la direction d'avance (46), **caractérisé en ce que** le dispositif de sciage (10) présente au moins une ouverture d'aspiration (96), qui peut être soumise à l'effet d'un vide et est orientée en affleurement par rapport à l'au moins une deuxième surface de butée (88) pour fixer les pièces sur l'au moins une deuxième surface de butée (88), dans lequel au moins une ouverture d'aspiration (96) est disposée entre deux systèmes de préhension (51, 52) directement voisins l'un de l'autre.

2. Dispositif de sciage selon la revendication 1, **caractérisé en ce que** le dispositif de sciage (10) comprend une barre de butée (76) orientée parallèlement à la direction d'avance (46), qui présente une face avant de barre (78) orientée perpendiculairement à la ligne de sciage, sur laquelle l'au moins une première surface de butée (80) est disposée.

3. Dispositif de sciage selon la revendication 2, **caractérisé en ce qu'**au moins une ouverture d'aspiration (84) débouche dans la face avant de barre (78).

4. Dispositif de sciage selon la revendication 2 ou 3, **caractérisé en ce que** respectivement au moins une ouverture d'aspiration (84) débouche dans la face avant de barre (78) des deux côtés de la fente de sciage (18).

5. Dispositif de sciage selon l'une quelconque des revendications précédentes, **caractérisé en ce que** le dispositif de sciage (10) présente plusieurs deuxièmes surfaces de butée (88), sur lesquelles les pièces peuvent être placées avec leur deuxième petit côté (108).

6. Dispositif de sciage selon l'une quelconque des revendications précédentes, **caractérisé en ce qu'**une ou plusieurs deuxièmes surfaces de butée (88) sont disposées sur au moins un système de préhension (51, 52, 53, 54, 55) .

7. Dispositif de sciage selon l'une quelconque des revendications précédentes, **caractérisé en ce qu'**au moins un système de préhension (51, 52, 53, 54, 55) présente un boîtier (56) avec au moins une face frontale (86) tournée vers la fente de sciage (18), qui réalise une deuxième surface de butée (88).

8. Dispositif de sciage selon la revendication 7, **caractérisé en ce que** le boîtier (56) comprend deux parois latérales (57, 58) orientées parallèlement l'une à l'autre, dans lequel les parois latérales (57, 58) présentent respectivement une face frontale (86) tournée vers la fente de sciage (18), qui réalise une deuxième surface de butée (88).

9. Dispositif de sciage selon l'une quelconque des revendications précédentes, **caractérisé en ce que** le système d'avance (44) présente au moins une plaque d'aspiration (92), sur laquelle au moins une ouverture d'aspiration (96) est disposée et qui est positionnée entre deux systèmes de préhension (51, 52) directement voisins l'un de l'autre.

10. Dispositif de sciage selon la revendication 9, **caractérisé en ce que** la plaque d'aspiration (92) est retenue sur le système d'avance (44) de manière à pouvoir se déplacer en va-et-vient entre une position d'aspiration et une position de repos.

11. Dispositif de sciage selon la revendication 9 ou 10, **caractérisé en ce qu'**au moins une ouverture d'aspiration (96) débouche dans une face avant de plaque (98) de la plaque d'aspiration (92) orientée perpendiculairement à la direction d'avance (46).

12. Dispositif de sciage selon l'une quelconque des revendications précédentes, **caractérisé en ce que** le dispositif de sciage (10) présente au moins une autre ouverture d'aspiration (116), qui peut être soumise à l'effet d'un vide et débouche dans la surface de support de pièce (16).

13. Dispositif de sciage selon l'une quelconque des revendications précédentes, **caractérisé en ce que** des sorties d'air (72) pouvant être soumises à l'effet d'air comprimé sont disposées sur la surface de support de pièce (16) pour la réalisation d'un coussin d'air.

14. Dispositif de sciage selon l'une quelconque des revendications précédentes, **caractérisé en ce que** le dispositif de sciage (10) présente une paroi de protection, qui recouvre une ouverture de chargement (110) du dispositif de sciage (10) opposée au système d'avance (44) pendant la division des pièces.

15. Dispositif de sciage selon la revendication 14, **caractérisé en ce que** la paroi de protection est configurée en tant que paroi à lamelles (112).

16. Dispositif de sciage selon la revendication 14 ou 15, **caractérisé en ce que** la paroi de protection est mobile en va-et-vient entre une position d'ouverture libérant l'ouverture de chargement (110) et une position de fermeture recouvrant l'ouverture de chargement.

17. Dispositif de sciage selon la revendication 14, 15 ou 16, **caractérisé en ce que** les systèmes de préhension (51, 52, 53, 54, 55) peuvent être activés par un système de commande (114) du dispositif de sciage (10), lorsque la paroi de protection occupe sa position de fermeture.
